# EUROPÄISCHE PATENTANMELDUNG

(11) **EP 1 265 332 A1**
(43) Veröffentlichungstag der Anmeldung: **11.12.2002**
(21) Anmeldenummer: 02012186.9
(22) Anmeldetag: 03.06.2002
(51) Int. Cl.: H02G 5/06

(54) **Dämpfende Stromschienen für Windkraftanlagen**

(30) Priorität: 06.06.2001 EP 01113782
(71) Anmelder: Mitsch, Franz, 64646 Heppenheim (DE)
(72) Erfinder: Mitsch, Franz, 64646 Heppenheim (DE)
(74) Vertreter: Benz, Jürgen, Dr.

(57) **Zusammenfassung**

Die Erfindung betrifft Stromschienen und Stromschienenkonstruktionen, welche Bauteile mit dämpfenden Eigenschaften und Materialien aufweisen und so für den Einbau in stark schwingenden bzw. sich bewegenden Gebäudekonstruktionen, insbesondere Windkraftanlagen, geeignet sind.

## Beschreibung

Die Erfindung betrifft Stromschienen und Stromschienenkonstruktionen, welche Bauteile mit dämpfenden Eigenschaften und Materialien aufweisen und so für den Einbau in stark schwingenden bzw. sich bewegenden Gebäudekonstruktionen, insbesondere Windkraftanlagen, geeignet sind.

Die Türme von Windkraftanlagen werden mit zunehmender Leistung der Anlagen höher. Bei Binnenlandanlagen werden Windkraftanlagen auf höheren Türmen installiert, damit diese in dem höher liegenden Bereich größerer Windgeschwindigkeiten mit geringeren Turbulenzen arbeiten. Die Türme bestehen in der Regel aus Stahl mit einer sehr geringen Materialdämpfung, so dass die Türme weitestgehend ungedämpft sind, was zur Folge hat, dass bereits geringste Erregerkräfte einen solchen Turm zu starken Schwingungen anregen. Bei den in Zukunft stärker zum Einsatz kommenden Off-Shore Anlagen muss der Turm um das Maß der Wassertiefe verlängert werden, was die Schwingungsfähigkeit der Türme verstärkt. Gleichzeitig tritt eine zusätzliche Erregung durch den Wellengang auf.

Windkraftanlagen unterliegen somit naturgemäß zusätzlichen und besonders ausgeprägten Kräften, welche vor allem durch die Rotorbewegung als solche, insbesondere in Form von Unwuchten, als auch durch teilweise extreme Winde, die aus verschiedensten Richtungen auf die Rotorblätter, die Gondel, den Turm und die gesamte Anlage insgesamt einwirken, erzeugt werden. Die technische Entwicklung von Windkraftkonstruktionen ist mittlerweile so weit voran gekommen, dass ausgesprochen leistungsfähige Anlagen gebaut werden können.

Mit zunehmender Gesamtleistung von Windkraftanlagen werden aber auch die elektrisch zu übertragenden Leistungen größer. Diese müssen auf möglichst niedrigem Spannungsniveau von dem Generator durch den Turm zum Transformator übertragen werden.

Die große Leistung bei verhältnismäßig kleiner Spannung bedeutet jedoch, dass in den Türmen große Ströme fließen müssen. Nach dem Stand der Technik werden dazu zumeist Kabel aber in seltenen Fällen auch Stromschienen eingesetzt.
Die bereits eingesetzten Stromschienen des Standes der Technik, die den üblichen Elektrotechnikanlagen entlehnt sind, können aber oft der Biegebewegung der Türme nicht standhalten und sind deshalb vom Turm entkoppelt eingebaut, was zu kostenintensiven

Aufhängevorrichtung, bei gleichzeitig selbst tragenden und damit teueren Konstruktionen der Schienen Aufhängevorrichtungen, führt.
Die Kabel haben den Nachteil, dass diese aufgrund ihres geringen Querschnittes in großer Anzahl eingesetzt werden müssen. So sind in Windkraftanlagen, die nach dem heutigen Stand der Technik einen Leistungsbereich bis zu 2.500 kW aufweisen in der Regel mehr als 20 Kabel erforderlich. Für die heute bereits geplanten Anlagen mit einem Leistungsbereich von bis zu 5.000 kW sind entsprechend höhere Kabelquerschnitte und / oder eine größere Anzahl von Kabeln erforderlich.
Im Kurzschlussfall eines Windkraftanlagengenerators entstehen kurzzeitig sehr hohe Ströme, welche große Kräfte auf die Kabel ausüben. Diese können bei größeren Windkraftanlagen kaum oder nur mit großem Aufwand von den Kabeln und der Kabelbefestigung aufgenommen werden, so dass die Gefahr besteht, dass die Kabel im Kurzschlussfall zerstört werden, was Folgeschäden nach sich zieht.

Es bestand somit die Aufgabe die Stromversorgung und Stromzuführung von insbesondere Windkraftanlagen im Hochleistungsbereich, also im Bereich hoher elektrische Ströme und niedriger Spannungen, auf technisch verbesserte und kostengünstige Weise sicherzustellen, wobei die bekannten Nachteile des oben genannten Standes der Technik vermieden oder zumindest deutlich reduziert werden sollen.

Die Aufgabe wurde durch die Bereitstellung des technischen Konzepts von neuartigen Stromschienen und Stromschienenkonstruktionen, wie sie in den Ansprüchen definiert und weiter unten genauer beschrieben werden, gelöst.
Die Stromschienen, bzw. Stromschienenkonstruktionen der vorliegenden Erfindung haben insbesondere den Vorteil, dass sie selbst bei erforderlichen hohen Strömen mit wenig Kabel auskommen, sich einfach und kostengünstig in den Turm der Windkraftanlage einbauen lassen und sich insbesondere aufgrund ihrer besonderen Konstruktion den unterschiedlichsten Einflüssen und Kräften anpassen, die auf eine Windkraftanlage ausgeübt werden können, wie etwa starke, durch Wind verursachte Bewegungen oder unterschiedliche, aufgrund unterschiedlich verwendeter Materialien bedingte Wärmeausdehnungen, und deshalb eine hohe Sicherheit für Material und Mensch garantieren. Die erfindungsgemäßen Stromschienen leiten den Strom durch den Windkraftanlagenturm auch im Kurzschlussfalle sicher ab, zum anderen bringen Sie eine Dämpfung in den Turm, welche zur Reduzierung der Schwingungen des Turmes führt.

Der Gegenstand der Erfindung lässt sich somit wie folgt, zusammenfassen und umfasst:
- eine Stromschiene mit dämpfenden Eigenschaften, bestehend aus einem oder mehreren Stromleitern (1), Isolatorelementen (2) und Befestigungsmitteln (4, 8), wobei die Isolatorelemente zwischen oder um die Stromleiter angeordnet sind, und die Isolatorelemente (2) dabei als Dämpfungselemente ausgelegt sind;
- eine entsprechende Stromschiene, bei der die Isolatorelemente (2) Gleitelemente sind, welche in der Lage sind, auf den Stromleitern (1) oder auf einer auf diese angebrachte Gleitschicht durch Reibung von außen einwirkende Bewegungs- oder Schwingungskräfte zu dämpfen oder zu kompensieren;
- eine entsprechende Stromschiene, bei der die Isolatorelemente (2) Elastomerelemente sind, welche durch Verformungsarbeit von außen einwirkende Bewegungs- oder Schwingungskräfte zu dämpfen oder zu kompensieren vermögen;
- eine entsprechende Stromschiene, bei der weitere Dämpfungselemente (5) zur seitlichen Führung und Abstützung der Stromleiter angebracht sind;
- eine entsprechende Stromschiene, welche zusätzlich eine Vorrichtung (6) zur Vorspannung der dämpfenden Isolatorelemente aufweist, so dass auftretende Kräfte an der Anlage ausgeglichen werden können;
- eine entsprechende Stromschiene, bei der zur Vorspannung eine Elastomerbauteil eingesetzt wird;
- eine entsprechende Stromschiene, bei der die Stromleiter (1) als Hohlkörper ausgebildet sind;
- eine entsprechende Stromschiene, welche in einem Gehäuse (3, 7) untergebracht ist oder ein Teil desselben ist, wobei in einer besonderen Ausführungsform dieses Gehäuse kein selbst tragendes massives Gehäuse (3) ist, sondern von der Stromschiene getragen wird;
- eine Stromschienenkonstruktion, bestehend aus einer Stromschiene wie oben unten beschrieben, und einem oder mehreren Ausgleichselementen (10, 12), welche ein freies Ende zur Befestigung an anderen Bauteilen oder an Gebäudekonstruktionen aufweisen und in vorgegebenen Abständen entlang des Schienenkörpers oder Schienen-Gehäusekörpers angebracht sind, wobei besagte Elemente aufgrund ihrer Materialeigenschaften und / oder Konstruktion unterschiedliche axiale Bewegungen des Schienenkörpers im Verhältnis zu den an ihrem freien Ende zu befestigenden anderen Bauteilen oder Gebäudekonstruktionen ausgleichen können;
- eine entsprechende Stromschienenkonstruktion, bei der besagte Elemente (10) aufgrund ihrer Materialeigenschaften und / oder Konstruktion zusätzlich unterschiedliche radiale Bewegungen des Schienenkörpers im Verhältnis zu den an ihrem freien Ende zu befestigenden anderen Bauteilen oder Gebäudekonstruktionen nicht übertragen können;
- eine entsprechende Stromschienenkonstruktion, bei der ein besagtes Ausgleichselement (10) aus zwei parallelen Werkstücken (10a) besteht, die im wesentlichen parallel zur Längsachse der Stromsschiene und parallel zueinander in einem Abstand zueinander in Form eines Gelenkstücks so angeordnet sind, dass die Stromschiene an einem Ende des Werkstückpaars passend eingeschoben und mittels in axiale Richtung beweglichen Befestigungsvorrichtungen (10b, 10c) befestigt werden kann und das andere Ende des Werkstückpaars entsprechend miteinander verbunden ist und ebenfalls in axiale Richtung bewegliche Befestigungsmittel (10b', 10c') aufweist, wobei das Gelenkstück in der Lage ist, einwirkende axiale Kräfte durch entsprechende Bewegung auszugleichen;
- eine entsprechende Stromschienenkonstruktion, bei der die Werkstücke Blattfedern aus Kunststoff oder Elastomermaterial sind;
- eine entsprechende Stromschienenkonstruktion, bei der die Ausgleichselemente (10) weitere Elastomerteile, insbesondere in Form von Elastomerbuchsen, aufweisen, die so angeordnet sind, dass sie Torsionskräfte aufnehmen können;
- eine Stromschienenkonstruktion, bei welcher die besagten Ausgleichselemente Lenkerfedern (12) sind, welche im wesentlichen senkrecht zur Längsrichtung der Stromschiene bzw. des Turms angeordnet sind;
- eine Verwendung einer entsprechenden Stromschiene oder einer entsprechenden Stromschienenkonstruktion in Windkraftanlagen oder starken Bewegungen oder Schwingungen ausgesetzten Gebäudekonstruktionen;
- eine entsprechende Verwendung bei der zwei oder vier Stromschienen eingesetzt werden, die in der Windkraftanlage bzw. Gebäudekonstruktion so angeordnet sind, dass sie um jeweils 90° versetzt sind; und letztlich
- eine entsprechende Verwendung bei der drei Stromschienen eingesetzt werden, die in der Windkraftanlage bzw. Gebäudekonstruktion so angeordnet sind, dass sie um jeweils 120° versetzt sind.

Im Detail kann die Erfindung wie folgt, beschrieben werden:
Die Stromschienen können mit mehreren übereinander bzw. hintereinander liegenden Stromleitern (1) ausgeführt werden. Der Stromleiter oder die Stromleiter sind von elastischen Elementen (2) umgeben, die auch als Gleitelemente ausgebildet sein können. Insbesondere haben diese Elemente auch die Aufgabe, den durch die Leiter fließenden Strom zu isolieren, erfüllen also im erfindungsgemäßen Sinn zwei technische Funktionen zugleich. Je weiter die Stromleiter (1) in den Turm hineingestapelt sind, um so größer wird die Relativbewegung zwischen den Stromleitern und damit die Dämpfungsarbeit durch die Reibelemente (2), welche dem Turm die Bewegungsenergie entzieht. Die Dämpfungsarbeit kann auch durch weitere zusätzliche Dämpfungselemente (5) verstärkt und für verschiedene Richtungen der Krafteinwirkung zugänglich gemacht werden.

Die erfindungsgemäße Stromschiene wird in einer Ausführungsform der Erfindung direkt am Mast befestigt, so dass im Kurzschlussfall der stabile Mast als tragendes Element dient. In einer anderen erfindungsgemäßen Ausführungsform befindet sich die eigentliche Stromschiene innerhalb eines Gehäuses (3) oder ist ein Teil von diesem. Das Gehäuse kann beispielsweise mittels einer Schraube oder Niete an der Turmwand der Windkraftanlage befestigt sein. In einer weiteren und bevorzugten Ausführungsform befindet sich die Stromschiene in einem Gehäuse (7) oder ist ein Teil von diesem, welches über Distanz- oder Ausgleichselemente (10) mit der Turm- oder Gebäudewand verbunden ist. Das Gehäuse wird hier von der Stromschiene selbst getragen und weist vorzugsweise aus Gründen einer besseren Stabilität in bestimmten Abständen Haltevorrichtungen (9), vorzugsweise Bügel, auf, die um die Gehäuseteile herum angebracht sind und gegebenenfalls mit Befestigungsmitteln (8) mit dem Gehäuse fest verbunden werden können. Das nicht selbst tragende Gehäuse hat unter anderem den Vorteil, dass es durch die Entkopplung von Teilen eine bessere Wärmeausdehnungskompensierung besitzt als ein selbst tragendes Gehäuse (3), welches in einem Stück gefertigt ist. Die Wärmeausdehnung über die gesamte Länge der Schiene hinweg kann oft zu einem Problem in derartigen Anlagen führen.

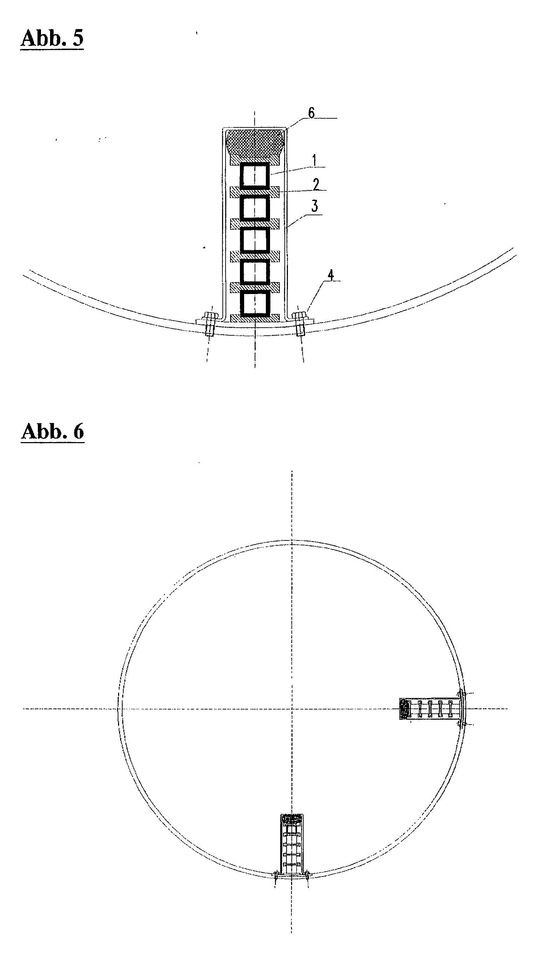

Die Isolatoren (2, 5) der Stromschienen werden mit Materialdämpfung oder als Reibungsdämpfer ausgeführt, so dass erfindungsgemäß eine Dämpfung des Turmes durch die Stromschienen erfolgt. Die Stromschienen im Turm mit beispielsweise rundem Querschnitt können in zwei Einheiten, welche 90° zueinander asymmetrisch versetzt sind, in drei Einheiten, welche 120° zueinander symmetrisch versetzt sind, in vier Einheiten, welche 90° zueinander symmetrisch versetzt sind, oder in noch größeren Einheiten mit entsprechend kleinerem Winkelversatz, angeordnet sein. Vorzugsweise werden drei oder vier Stromschienen für einen Turm mit 90° oder 120° symmetrischen Versatz eingesetzt, da hierdurch der Turm in allen Richtungen nahezu gleichmäßig bedämpft wird. Abb. 6 zeigt den Turmquerschnitt mit zwei Stromschienen.

Die einzelnen Leiter werden erfindungsgemäß durch die elastische Isolatoren voneinander getrennt. Grundsätzlich können zwei Systeme betrachtet werden, nämlich (i) die Reibungsdämpfung zwischen Isolator und Stromleiter und (ii) die Dämpfung durch die Werkstoffeigenschaften des Isolators, welcher fest mit den Stromleitern verbunden ist.
Bei beiden Systemen kann der Isolator als zusätzliche Einheit, unabhängig von den Dämpfungselementen ausgeführt werden.

Die Stromschiene enthält einen oder mehrere Stromleiter (1). Diese können aus Kupfer, Aluminium, Stahl oder anderen leitenden Werkstoffen oder deren Legierungen bestehen.
Die Stromleiter sind vorzugsweise rechteckig, aus Vollmaterial oder Rohr ausgeführt, da hierdurch eine Kompaktbauweise erreicht werden kann. Zudem lassen sich derartige Systeme leichter und preiswerter fertigen. Da der Strom überwiegend an der Oberfläche der Stromleiter fließt, werden diese vorzugsweise als Hohlkörper ausgeführt. Der vorzugsweise rechteckige Hohlkörper ermöglicht gleichzeitig eine zusätzliche Kühlung des Stromleiters durch die nach oben aufsteigende Luft. Zusätzlich bewirkt der Hohlkörper einen dickeren Aufbau des gesamten Elementes, was vorteilhaft für die Dämpfung der dadurch weiter entfernten Dämpfungsschichten (Reibung oder Materialdämpfung) ist. Bei größerem Abstand der Dämpfungsschichten wird die Relativbewegung zwischen den einzelnen Dämpfungsschichten größer, was bei gleicher Schiefstellung des Turmes eine größere Reibungsdämpfungsarbeit bedeutet.

Die Isolatoren (2) sind aus nicht leitendem Material, beispielsweise aus Kunststoff. Die Isolatorelemente sind vorzugsweise gleichzeitig als Gleitelemente ausgeführt oder haben bei dieser Ausführungsform eine zusätzlich aufgebrachte Gleitschicht aus hiefür üblichen Materialien mit geringem Reibungskoeffizienten, welche auf dem Strom führenden Material oder auf einer zusätzliche auf den Stromleiter aufgebrachten Gleitschicht bei Bewegung des Turmes reiben. Die Reibung zwischen den Stromleitern (1) und den Isolatoren (2) bei Verbiegung des Turmes wirkt als Dämpfungsarbeit, welche die Bewegungsenergie des Turmes bei Schwingungen in Arbeit umwandelt und somit die Schwingungen des Turmes reduziert. Dabei werden die Reibelemente durch eine Vorspannkraft gegeneinander gepresst.

Die Isolatorelemente sind in einer weiteren bevorzugten Ausführungsform der Erfindung aus elastischen Materialien, die falls notwendig, oberflächig in Kontakt mit dem Stromleiter (1) eine entsprechende Gleitschicht besitzen. Das elastische Material der Isolatorelemente (2) bewirkt eine weiter Dämpfungsarbeit und kann den oben angesprochenen Effekt verstärken. Bei dieser zweiten Variante ist der Isolationswerkstoff also gleichzeitig dämpfend ausgeführt. Er besteht aus einem Kunststoff oder Elastomer mit dämpfenden Eigenschaften, d. h. die Verformungsarbeit, welche in den Werkstoff bei der Turmbewegung hineingesteckt wird, kommt nur noch teilweise als Rückfederkraft zurück, während ein Teil der Bewegungsarbeit in dem Werkstoff in Wärme umgewandelt wird. Bei dieser Variante ist der Isolator, welcher gleichzeitig dämpfende Eigenschaften hat, mit dem Stromleiter fest verbunden (beispielsweise verklebt). Es kann auch zusätzlich zum Isolator ein weiterer dämpfender Werkstoff eingesetzt werden, welcher mit dem Isolator und dem Stromleiter fest verbunden (verklebt) wird.
Die Elastomermaterialien gemäß der vorliegenden Erfindung bestehen im wesentlichen aus einem Naturkautschuk, einem Naturkautschukderivat oder aus einem geeigneten elastischen polymeren Kunststoff oder Kunststoffgemisch. Das Elastomer kann erfindungsgemäß unterschiedliche Härte ("Shore-Härte") und unterschiedliche Dämpfungseigenschaften aufweisen, entsprechend den gewünschten Anforderungen. Vorzugsweise werden Elastomere mit einer Härte von 20 bis 100 Shore, insbesondere 30 bis 80 Shore verwendet. Die Herstellung derartiger Elastomere unterschiedlicher Härte ist im Stand der Technik bekannt und in der einschlägigen Literatur hinreichend beschrieben. Vorzugsweise werden handelsübliche Naturkautschuke oder Kunststoffe eingesetzt. Beispiele für geeignete Elastomere sind: Naturkautschuk, Isopren-, Butadien-, Polynorbonen-, Chloropren-, Styrolbutadien-, Butyl-, Äthylenpropylen-, Nitril-, Polyurethan-, Acrylat-, Äthylenacrylat, Silicon- oder Fluor- Kautschuke bzw. Kunststoffe.

Zur Aufrechterhaltung der für die Reibarbeit notwendigen Vorspannung weisen die erfindungsgemäßen Stromschienen Spannelemente (6) auf. Die Vorspannung kann wie in Abb. 1 dargestellt, durch Tellerfedern erfolgen , durch eine federnde Form des Gehäuses (Abb. 2, 3), durch eine federnde Form der Stromleiter oder der Isolatoren- Reibelemente oder durch zusätzlich eingebrachte Federn, welche als Elastomerfedern (Abb. 4, 5) oder als Stahlfedern ausgeführt sein können.

Die Erfindung betrifft auch Stromschienenkonstruktionen, welche Stromschienen der oben beschriebenen Art enthalten. Hierbei ist die Stromschiene nicht direkt mit der Wand des Turmes der Windkraftanlage verbunden sondern über ein fest mit der Stromschiene verbundenes Ausgleichselement (10, 12). Eine derartige erfindungsgemäße Konstruktion besteht also aus einer Stromschiene und einen solchem Element. Das Element dient dazu unterschiedliche Kräfte, welche auf die Stromschiene einerseits und die Turmwand andrerseits wirken, auszugleichen, zu kompensieren oder zu reduzieren. Ein Beispiel hierfür ist die unterschiedliche Wärmeausdehnung der verwendeten Materialien, die aufgrund der erheblichen Länge, welche Stromschiene bzw. Turm aufweisen, beträchtlich sein kann. So sind die erfindungsgemäßen Stromschienen überwiegend aus Aluminium oder Kupfer oder entsprechend geeigneten anderen Materialien gefertigt, während der Turm einer Windkraftanlage zumeist aus einer Stahlkonstruktion besteht.

Die erfindungsgemäßen Ausgleichselemente (10, 12) können im einfachsten Fall reine Elastomer-Elemente sein, die gegebenenfalls durch andere Materialen konstruktiv verstärkt sein können. Als Beispiel hierfür sind Gumminocken zu nennen, die in regelmäßigen Abständen an der Schiene bzw. der Gebäude-/Turmwand angebracht sind. Um Kräfte, die aufgrund von unterschiedlicher Wärmeausdehnung zwischen den genannten Gegenständen auftreten, zu kompensieren, muss das Material bzw. die Konstruktion des besagten Elements (10, 12) so beschaffen sein, dass es in der Lage ist, in axialer Richtung, also längs der Turmachse, Dämpfungsarbeit zu verrichten.
In einer besonderen Ausführungsform besteht ein derartiges Ausgleichselement (10) aus zwei Laschen oder länglichen Werkstücken (10a) in Form eines Gelenkstücks, die parallel in einem Abstand zueinander so angeordnet sind, dass die Stromschiene an einem Ende des Laschenpaars passend eingeschoben und in axialer Richtung beweglich befestigt werden, und das andere Ende des Laschenpaars mit der Turmwand ebenfalls axial beweglich verbunden werden kann. Die axiale Beweglichkeit des Laschenpaarglieds zwischen der Stromschiene und der Turmwand wird durch entsprechend bewegliche Befestigungsvorrichtungen (10b, 10c, 10b', 10c') erzielt, welche Teile des Ausgleichselements (10) darstellen und insbesondere Gelenk- oder Schaniervorrichtungen oder Wellen sein können. Das Laschenpaar ist deswegen so ausgerichtet, dass seine Flächen parallel zur Längsachse des Turm ausgerichtet sind. In einer weitem Ausführungsform besteht das Laschenpaar aus elastischem Material, z.B. Metall oder Kunststoff und kann somit als Blattfeder wirken, welche zusätzlich senkrecht auf sie einwirkende Kräfte dämpfen kann.

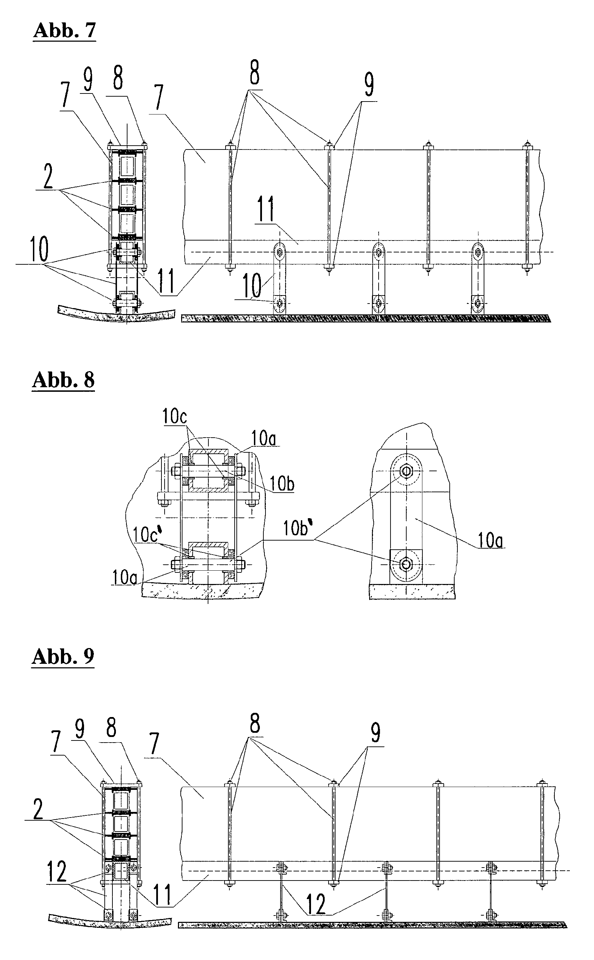

Ferner kann das Ausgleichselement (10) weitere Elastomerelemente (10c) enthalten, die so angeordnet sind, beispielsweise in Nähe der Gelenk- oder Schaniervorrichtungen bzw. Wellen, dass sie Torsionskräfte dämpfen bzw. ausgleichen können. Vorzugsweise können hierbei Elastomerbuchsen zum Einsatz kommen. Das Ausgleichselement kann erfindungsgemäß auch anders gestaltet sein und kann eine kompakte oder offene Bauweise besitzen. Vorzugsweise besitzen die Ausgleichselemente die Form von Gelenkgliedern, die in bestimmten Abständen entlang der Stromsschiene angebracht sind. Ferner können sie auch den Nullleiter (11) der Stromversorgung sowohl innerhalb als auch außerhalb der Schiene, bzw. des Gehäuses, aufnehmen.
Die Ausgleichselemente (10) haben also zusammengefasst den Haupteffekt, dass eine Wärmeausdehnung der Stromschiene gegenüber der Gebäude- / Turmwand in Längsrichtung (axial) kompensiert bzw. reduziert werden kann unter gleichzeitiger Aufrechterhaltung der zur Turm- / Gebäudedämpfung erforderlichen hohen Steifigkeit in Richtung zur Turm- /Gebäudewand (radial), so dass die Stromschiene bei Verbiegung des Turms / Gebäudes durch einwirkende Kräfte (z.B. Wind, Rotation) sich gemeinsam mit dem Turm verbiegen kann.
In einer weiteren besonders kostengünstigen Ausführungsvariante (Abb. 9) der vorliegenden Erfindung stellen die Ausgleichselemente einfache Lenker- oder Blattfedern (12), vorzugsweise aus Metall oder Kunststoff, dar, welche (bzw. deren Fläche) im Gegensatz zu den oben beschriebenen Laschenelementen (10) im wesentlichen senkrecht zur Längsrichtung der Stromschiene bzw. des Turms angeordnet sind und so die axial wirkenden Kräfte, wie sie beispielsweise bei einer unterschiedlichen Wärmeausdehnung von Turm und Schienenkonstruktion auftreten können, ganz oder teilweise zu kompensieren vermögen.

### Beschreibung der Abbildungen:

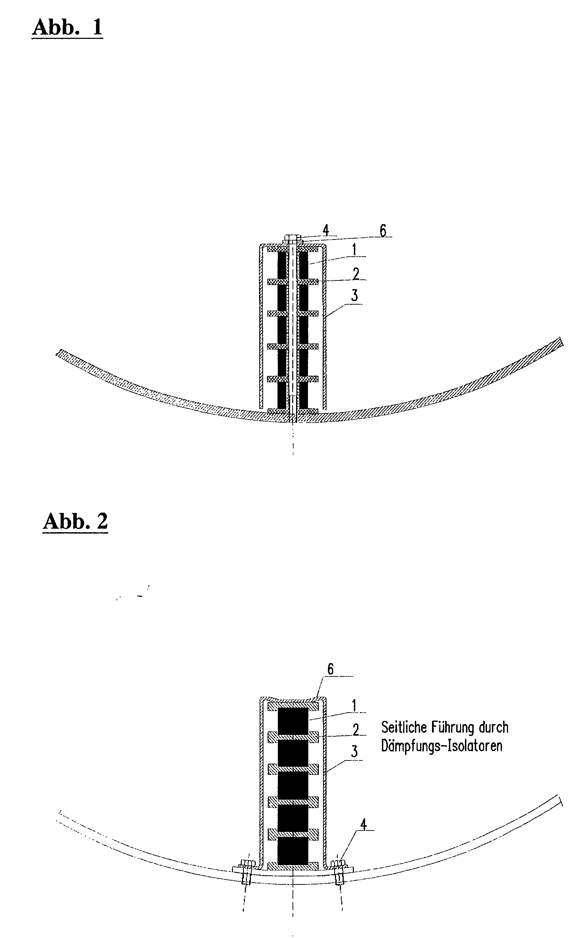

Abb. 1 zeigt eine dämpfende Stromschiene mit Reibungsdämpfung. Die Verschraubung mit dem Turm erfolgt mit einer mittleren Schraube, welche durch den Stromleiter hindurchgeführt ist. Der Stromleiter ist außer den Bohrungen für die Verschraubung aus Vollmaterial. Zur Verhinderung von Kurzschlüssen wird die Schraube gegen den Stromleiter mit einer Kunststoffhülse geschützt.

Abb. 2 zeigt eine Stromschiene mit Leitern aus Vollmaterial. Die für die Reibung erforderliche Vorspannung erfolgt durch eine besondere Form der Abdeckung. Die Isolatoren sind mit einem Profil ausgebildet, welche das Seitliche Verrutschen der Stromschienen verhindert.

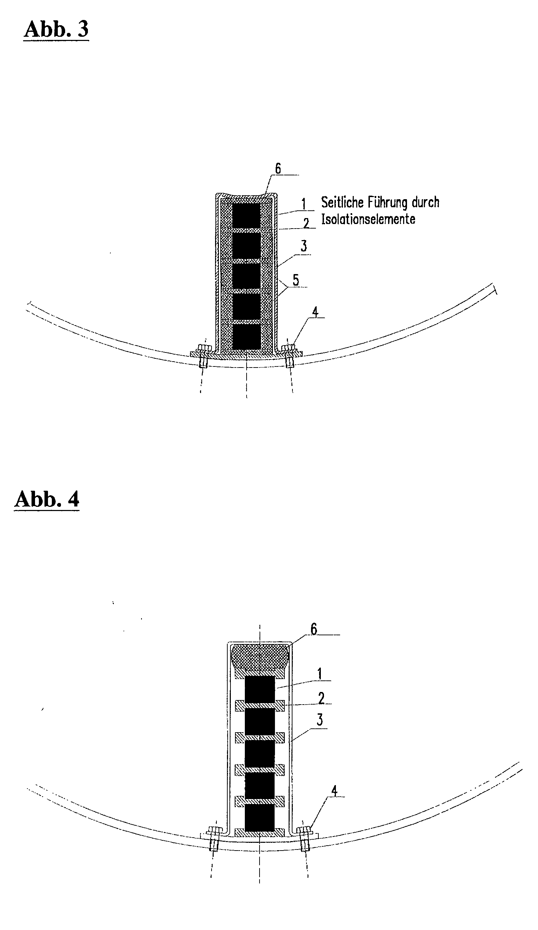

Abb. 3 zeigt eine Stromschiene mit Leitern aus Vollmaterial. Die für die Reibung erforderliche Vorspannung erfolgt durch eine besondere Form der Abdeckung. Zusätzlich eingearbeitete seitliche Isolatoren verhindern bei dieser Ausführung das seitliche Ausweichen der Stromschienen.

Abb. 4 zeigt Stromleiter aus Vollmaterial. Die Vorspannung erfolgt durch eine vorgespannte Elastomerschiene.

Abb. 5 zeigt eine ähnliche Stromschiene wie Abb. 4, jedoch sind hier die Stromleiter aus Rechteckrohr mit den im Text beschriebenen Vorteilen ausgeführt.

Abb. 6 zeigt einen Querschnitt durch eine Turm mit zwei um 90° versetzten Stromschienen.

Abb. 7 zeigt einen Querschnitt (linker Teil) und eine Seitenansicht einer Stromschiene, welche in einem von der Schiene getragenem Gehäuse (7) über ein als Gelenk wirkendes Ausgleichselement (10) mit der Turmwand einer Windkraftanlage verbunden ist.

Abb. 8 zeigt das Ausgleichselement (10) in zwei verschiedenen vergrößerten Sichten.

Abb. 9 zeigt die gleichen Schnitte wie Abb. 7 für eine Stromschiene, welche mit Ausgleichselementen (12) in Form von Lenker-/ Blattfedern ausgestattet ist.

Beschreibung der im Text und in den Abbildung genannten Bezugsgrößen:

| | |
|---|---|
| 1 | Stromleiter |
| 2 | Isolator - Reibelement |
| 3 | selbst tragendes Gehäuse |
| 4 | Befestigungsschraube |
| 5 | zusätzliche Isolatoren |
| 6 | Vorrichtung zur Vorspannung |
| 7 | nicht selbst tragendes Gehäuse |
| 8 | Befestigungsschrauben |
| 9 | Befestigungsbügel |
| 10 | Ausgleichselement |
| 10a, 10a' | Lasche |
| 10b, 10b' | bewegliche Befestigungsvorrichtungen |
| 10c, 10c' | Elastomerelmente zur Aufnahme von radialen bzw. Torsionskräften |
| 11 | Nulleiter |
| 12 | Ausgleichselement in Form von Blatt/-Lenkfedern |

## Patentansprüche

1. Stromschiene mit dämpfenden Eigenschaften, bestehend aus einem oder mehreren Stromleitern (1), Isolatorelementen (2) und Befestigungsmitteln (4, 8), wobei die Isolatorelemente zwischen oder um die Stromleiter angeordnet sind, **dadurch gekennzeichnet, dass** die Isolatorelemente (2) als Dämpfungselemente ausgelegt sind.

2. Stromschiene nach Anspruch 1, **dadurch gekennzeichnet, dass** die Isolatorelemente (2) Gleitelemente sind, welche in der Lage sind, auf den Stromleitern (1) oder auf einer auf diese angebrachte Gleitschicht durch Reibung von außen einwirkende Bewegungsoder Schwingungskräfte zu dämpfen oder zu kompensieren.

3. Stromschiene nach Anspruch 1, **dadurch gekennzeichnet, dass** die Isolatorelemente (2) Elastomerelemente sind, welche durch Verformungsarbeit von außen einwirkende Bewegungs- oder Schwingungskräfte zu dämpfen oder zu kompensieren vermögen.

4. Stromschiene nach einem oder mehrerer der Ansprüche 1 bis 3, **dadurch gekennzeichnet, dass** weitere Dämpfungselemente (5) zur seitlichen Führung und Abstützung der Stromleiter angebracht sind.

5. Stromschiene nach einem oder mehrerer der Ansprüche 1 bis 4, **dadurch gekennzeichnet, dass** sie eine Vorrichtung (6) zur Vorspannung der dämpfenden Isolatorelemente aufweist.

6. Stromschiene nach Anspruch 5, **dadurch gekennzeichnet, dass** zur Vorspannung eine Elastomerbauteil eingesetzt wird.

7. Stromschiene nach einem oder mehrerer der Ansprüche 1 - 6, **dadurch gekennzeichnet, dass** die Stromleiter (1) als Hohlkörper ausgebildet sind.

8. Stromschiene gemäß einem oder mehrerer der Ansprüche 1 - 7, **dadurch gekennzeichnet, dass** sie in einem Gehäuse (3, 7) untergebracht ist oder ein Teil desselben ist.

9. Stromschiene nach Anspruch 8, **dadurch gekennzeichnet, dass** das Gehäuse (7) von der Stromschiene selbst getragen wird.

10. Stromschienenkonstruktion, bestehend aus einer Stromschiene gemäß der Ansprüche 1 - 9 und einem oder mehreren Ausgleichselementen (10, 12), welche ein freies Ende zur Befestigung an anderen Bauteilen oder an Gebäudekonstruktionen aufweisen und in vorgegebenen Abständen entlang des Schienenkörpers oder Schienen-Gehäusekörpers angebracht sind, wobei besagte Elemente aufgrund ihrer Materialeigenschaften und / oder Konstruktion unterschiedliche axiale Bewegungen des Schienenkörpers im Verhältnis zu den an ihrem freien Ende zu befestigenden anderen Bauteilen oder Gebäudekonstruktionen übertragen können.

11. Stromschienenkonstruktion nach Anspruch 10, **dadurch gekennzeichnet, dass** besagte Elemente (10) aufgrund ihrer Materialeigenschaften und / oder Konstruktion zusätzlich unterschiedliche radiale Bewegungen des Schienenkörpers im Verhältnis zu den an ihrem freien Ende zu befestigenden anderen Bauteilen oder Gebäudekonstruktionen nicht übertragen können.

12. Stromschienenkonstruktion nach Anspruche 10 oder 11, **dadurch gekennzeichnet, dass** ein besagtes Ausgleichselement (10) aus zwei parallelen Werkstücken (10a) besteht, die parallel zur Längsachse der Stromsschiene und parallel zueinander in einem Abstand zueinander in Form eines Gelenkstücks so angeordnet sind, dass die Stromschiene an einem Ende des Werkstückpaars passend eingeschoben und mittels in axiale Richtung beweglichen Befestigungsvorrichtungen (10b, 10c) befestigt werden kann und das andere Ende des Werkstückpaars entsprechend miteinander verbunden ist und ebenfalls in axiale Richtung bewegliche Befestigungsmittel (10b', 10c') aufweist, wobei das Gelenkstück in der Lage ist, einwirkende axiale Kräfte durch entsprechende Bewegung auszugleichen.

13. Stromschienenkonstruktion nach Anspruch 12, **dadurch gekennzeichnet, dass** die besagten Werkstücke Blattfedern aus Kunststoff oder Elastomermaterial sind.

14. Stromschienenkonstruktion nach Anspruch 12 oder 13, **dadurch gekennzeichnet, dass** das Ausgleichselement (10) Elastomerteile aufweist, die so angeordnet sind, dass sie Torsionskräfte dämpfen können.

15. Stromschienenkonstruktion nach Anspruch 14, **dadurch gekennzeichnet, dass** besagte Elastomerteile Buchsen sind, welche um die beweglichen Befestigungsmittel (10b, 10c, 10b', 10c') angeordnet sind.

16. Stromschienenkonstruktion nach Anspruch 10, **dadurch gekennzeichnet, dass** das Ausgleichselement eine Federkonstruktion (12) ist, welche so angeordnet ist, dass die Federfläche im wesentlichen senkrecht zur Längsachse der Stromschiene ist, um axial wirkende Kräfte zu dämpfen.

17. Verwendung einer Stromschiene oder einer Stromschienenkonstruktion gemäß einem oder mehrerer der Ansprüche 1- 16 in Windkraftanlagen oder starken Bewegungen oder Schwingungen ausgesetzten Gebäudekonstruktionen.

18. Verwendung nach Anspruch 17, **dadurch gekennzeichnet, dass** zwei oder vier Stromschienen eingesetzt werden, die in der Windkraftanlage bzw. Gebäudekonstruktion so angeordnet sind, dass sie um jeweils 90° versetzt sind.

19. Verwendung nach Anspruch 18, **dadurch gekennzeichnet, dass** drei Stromschienen eingesetzt werden, die in der Windkraftanlage bzw. Gebäudekonstruktion so angeordnet sind, dass sie um jeweils 120° versetzt sind.
